# EUROPÄISCHE PATENTSCHRIFT

(11) **EP 1 945 486 B1**
(45) Veröffentlichungstag und Bekanntmachung des Hinweises auf die Patenterteilung: **21.12.2011**
(21) Anmeldenummer: 06793501.5
(22) Anmeldetag: 14.09.2006
(51) Int. Cl.: B60S 1/38

(54) **WISCHBLATT**
WIPER BLADE
BALAI D'ESSUIE-GLACE

(30) Priorität: 02.11.2005 DE 102005052258
(43) Veröffentlichungstag der Anmeldung: 23.07.2008
(73) Patentinhaber: ROBERT BOSCH GMBH, 70442 Stuttgart (DE)
(72) Erfinder: HOLZ, Dieter, 71563 Affalterbach (DE); DE BLOCK, Peter, B-3545 Halen (BE); LUYPAERTS, Edwin, B-2490 Balen (BE); HAEFELE, Klaus-Dieter, 76534 Neuweier (DE); FATAN, Bart, B-3510 Kermt (BE)
(86) Internationale Anmeldenummer: PCT/EP2006/066348
(87) Internationale Veröffentlichungsnummer: WO 2007/051669

(56) Entgegenhaltungen:
- EP-A- 1 564 094
- DE-A1- 10 025 710
- DE-A1- 10 038 397
- DE-A1- 10 259 478
- DE-U1-202004 012 109
- US-A- 3 703 018

## Beschreibung

### Stand der Technik

Die Erfindung geht von einem Wischblatt nach dem Oberbegriff des Anspruchs 1 aus.

Aus der DE 100 25 710 A1 ist ein Wischblatt für Scheibenwischer von Kraftfahrzeugen bekannt, das ein Wischgummi mit einer Kopfleiste und einer daran sich über einen Kippsteg anschließende Wischleiste besitzt. Die Kopfleiste weist zwei seitliche Längsnuten auf, in die Federschienen eingesetzt sind. Diese dienen als federelastisches Tragelement, sodass kein weiteres Tragbügelsystem erforderlich ist. Vielmehr wird das Wischblatt über ein etwa mittig angeordnetes Anschlusselement gelenkig mit einem Wischarm verbunden. An den Enden werden die Wischleisten, die zum Teil seitlich aus den Längsnuten vorstehen, durch eine Brücke zusammengehalten. Diese besitzt Seitenteile mit parallel zu den Federschienen verlaufenden, nach außen weisenden Stützen, die an den Federschienen befestigt sind, z.B. durch Schweißen. Ein Mittelteil zwischen den Seitenteilen überbrückt eine Deckleiste der Kopfleiste, die die Längsnuten nach oben begrenzt. An dem Mittelteil ist eine Lasche angeformt, die sich in Längsrichtung des Wischblatts erstreckt und mit einer an ihrem freien Ende angeformten Kralle bei der Montage in die Deckleiste des Wischgummis gedrückt wird. Die Brücke sichert somit die Lage der Federschienen zueinander und relativ zum Wischgummi. Die Brücken werden durch Schutzkappen abgedeckt.

Aus der DE-A-10259478 ist ein Wischblatt mit einem Wischgummi bekannt, in dessen seitliche Längsnuten als federelastisches Tragelement zwei Federschienen eingesetzt sind. Die Federschiene sind durch eine Brücke miteinander verbunden, wobei die Brücke mit den Federschienen verschweißt ist.

### Vorteile der Erfindung

Nach der Erfindung sind in den Federschienen im Bereich ihrer Enden Löcher vorgesehen, durch die Teile der Seitenteile hindurchgreifen und auf der dem Mittelteil abgewandten Seite der Federschienen plastisch so verformt sind, dass die Brücke mit den Federschienen fest verbunden ist. Die plastische Verformung geschieht zweckmäßigerweise durch Kaltverformen, z.B. durch Stauchen, Verstemmen, Vernieten, Kerben, Biegen oder dgl. Da keine hohen Temperaturen angewendet zu werden brauchen, wird weder der Federstahl der Federschienen noch der Wischgummi negativ beeinflusst oder beschädigt. Ferner sind zur Fertigung und Montage keine komplexen Einrichtungen und Haltevorrichtungen erforderlich.

Die Löcher in den Federschienen können einen kreisförmigen Umfang haben oder als Langloch mit einem rechteckigen Umfang oder abgerundeten Umfang ausgebildet sein. Ein Langloch hat gegenüber einem kreisförmigen Loch den Vorteil, dass die Brücke gegenüber den Federschienen gegen Verdrehen gesichert ist. Die Teile der Seitenteile der Brücke, die durch die Löcher der Federschienen gesteckt werden, haben im Wesentlichen die gleiche Querschnittkontur wie die Löcher. Sie können als Lappen in einem Stanz- und Biegeverfahren an die Brücke angeformt sein oder durch Drücken und Tiefziehen als Zapfen aus dem Material der Seitenteile geformt werden. Auf der der Brücke abgewandten Seite der Federschienen werden die vorstehenden Teile der Lappen bzw. Zapfen entsprechend plastisch verformt. Besitzt der Zapfen einen kreisförmigen oder halbkreisförmigen Umfang, kann außer den übrigen Verformungsverfahren auch das Taumeln angewendet werden.

Die Teile der Seitenteile der Brücke, die durch die Löcher der Federschienen ragen und zur Befestigung der Brücke dienen, sind nach der Erfindung während der Montage angeformt, indem die Seitenteile der Brücke mit parallel zu den Federschienen verlaufenden, nach außen weisenden Stützen an der Oberfläche der Federschienen im Bereich der Löcher anliegen und durch Pressen oder Tiefziehen mit einem Stempel aus dem Material der Stützen Zapfen durch die Löcher geformt und an der anderen Seite aufgeweitet werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung eines Endes eines Wischblatts,
- Fig.: 2 einen Querschnitt entsprechend der Linie II-II in Fig. 1,
- Fig. 3: eine Variante zur Fig. 1,
- Fig. 4: einen Querschnitt entsprechend der Linie IV-IV in Fig. 3,
- Fig. 5: eine perspektivische Darstellung einer Brücke für ein Wischblatt,
- Fig. 6: einen Querschnitt analog zur Fig. 4 mit einer Brücke nach Fig. 3,
- Fig. 7: eine Variante zur Fig. 1 und
- Fig. 8: einen Querschnitt entsprechend der Linie VIII-VIII in Fig. 7.

### Beschreibung der Ausführungsbeispiele

In der Beschreibung sind gleich wirkende Teile mit den gleichen Bezugszeichen gekennzeichnet. Ein Wischblatt 10 besitzt ein Wischgummi 12 mit einer Wischlippe 14, die über einen Kippsteg 16 mit einer Kopfleiste 18 verbunden ist. In der Kopfleiste 18 sind seitliche Längsnuten 20 vorgesehen, in die Federschienen 34 eingesetzt sind. Die Längsnuten 20 werden nach oben hin durch eine Deckleiste 22 begrenzt.

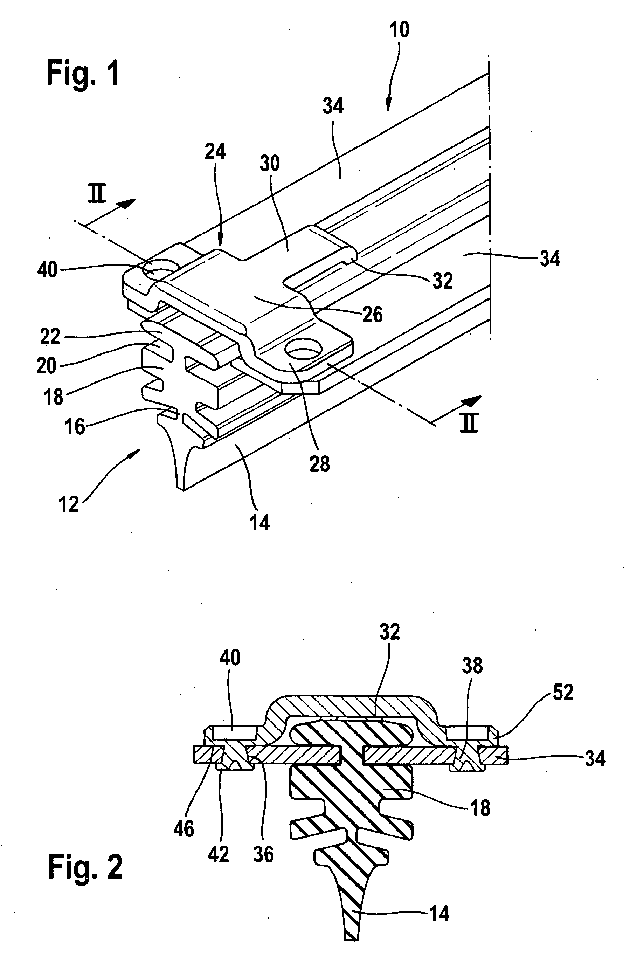

Die Federschienen 34 ragen ein Stück weit seitlich aus den Längsnuten 20 heraus und sind an ihren Enden durch eine Brücke 24 miteinander verbunden. Die Brücke 24 besitzt ein Mittelteil 26 und zwei Seitenteile 28, die an den Federschienen 34 befestigt sind. Hierzu besitzen die Federschienen 34 Löcher 36, durch,die Zapfen 38 der Seitenteile 28 gesteckt werden. In dem Ausführungsbeispiel nach Fig. 1 und Fig. 2 sind die Zapfen 38 vor oder bei der Montage der Brücke 24 durch Pressen oder Tiefziehen hergestellt worden. Das dazu erforderliche Material wurde den Seitenteilen 28 entnommen, wodurch sich an der den Zapfen gegenüberliegenden Seite der Seitenteile 28 Vertiefungen 40 ergeben.

Die Seitenteile 28 besitzen parallel zu den Federschienen 34 verlaufende Stützen 52, die nach außen weisen und an der oberen Fläche der Federschienen 34 mit Stützflächen 46 anliegen. Von diesen Stützen 52 ausgehend ragen die Zapfen 38 durch die Löcher 36 und werden auf der anderen Seite plastisch verformt. In der Ausführung nach Fig. 2 wird dieses Ende der Zapfen 38 aufgeweitet und vernietet, sodass sich ein Kragen 42 an der unteren Fläche der Federschienen 34 bildet. Zweckmäßigerweise verjüngt sich, wie aus Fig. 2 hervorgeht, das Loch 36 konisch zur Stütze 52 hin. Stattdessen oder zusätzlich dazu kann es zweckmäßig sein, dass die Ränder der Löcher 36 angefast sind. Dadurch werden Kerbspannungen vermieden und der Materialfluss wird beim Umformen begünstigt. Durch die Brücke 24 wird die Lage der beiden Federschienen 34 zueinander fixiert.

Der Mittelteil 26 der Brücke 24 kann eine Lasche 30 aufweisen, die sich in Längsrichtung des Wischblatts 10 erstreckt und an ihrem freien Ende Krallen 32 besitzt. Bei der Montage werden die Krallen 32 in die Deckleiste 22 des Wischgummis 12 gedrückt. Dadurch wird die Lage der Federschienen 34 zusätzlich relativ zum Wischgummi 12 gesichert.

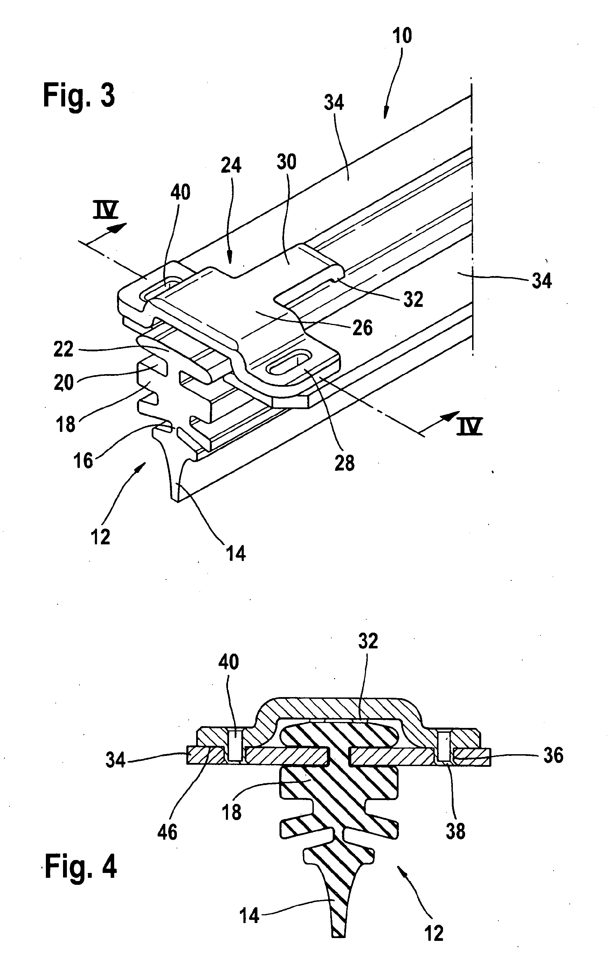

Die Ausführung nach Fig. 3 und Fig. 4 besitzt im Unterschied zu der Ausführung nach Fig. 1 und Fig. 2 Löcher 36 in Form von Langlöchern, die eine rechteckige Umfangskontur oder eine abgerundete Umfangskontur aufweisen können. Der Zapfen 38 ist bei der Montage gefertigt, indem die Brücke 24 mit ihren nach außen weisenden Stützen 52 auf die Oberseite der Federschienen 34 gesetzt wird. Mit einem Stempel wird Material durch die Löcher 36 gedrückt, ähnlich wie beim Tiefziehen. An der Unterseite der Federschiene 34 wird das Material plastisch verformt, z.B. durch Umfelsen, Verstemmen, Nieten usw. Auch hierbei sind die Löcher 36 zweckmäßigerweise leicht konisch und/oder an ihren Rändern angefast. Durch die Langlöcher kann sich die Brücke 24 nicht relativ zu den Federschienen 34 drehen.

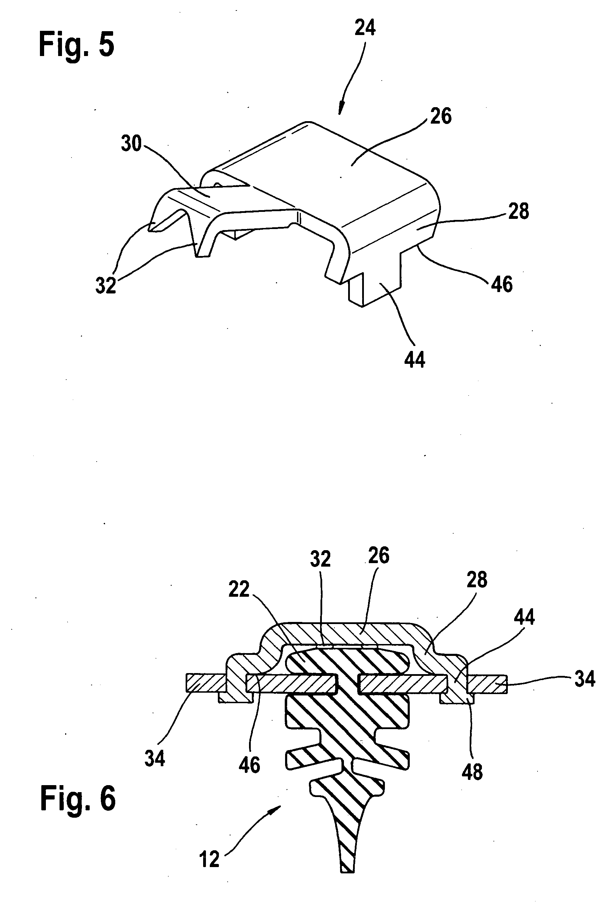

Bei der Ausführung nach Fig. 5 und Fig. 6 besitzen die Seitenteile 28 der Brücke 24 angeformte Lappen 44, die im Biege- und Stanzverfahren hergestellt sind. Die Lappen 44 werden durch die Löcher 36 gesteckt und an ihrem freien Ende entsprechend plastisch verformt, z.B. vernietet, sodass an der Unterseite der Federschienen 34 Nietköpfe 48 gebildet werden. An der Oberseite der Federschienen 34 liegt die Brücke 24 mit ihren Stützflächen 46 fest an den Federschienen 34 an.

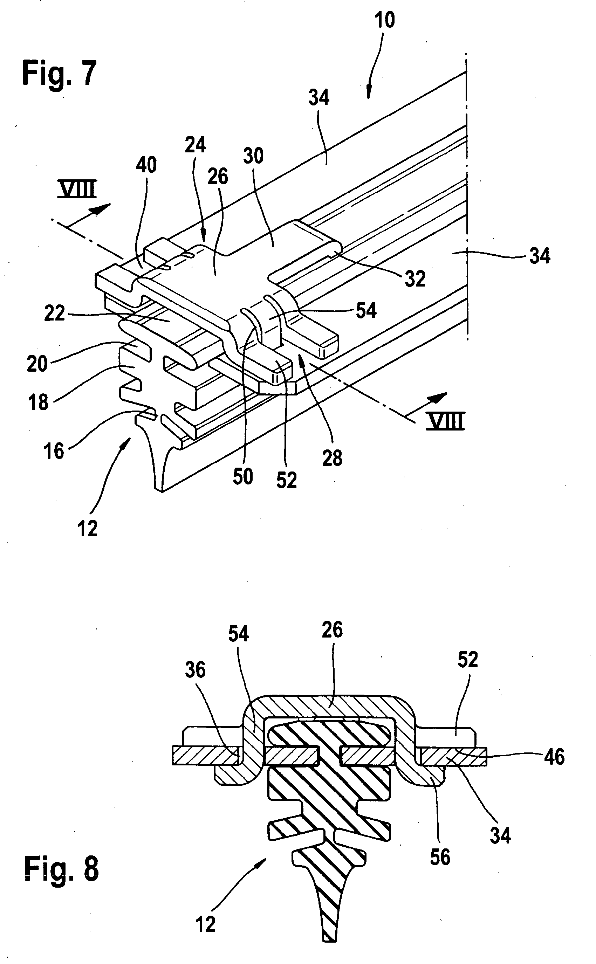

Bei der Varianten nach Fig. 7 und Fig. 8 besitzt die Brücke 24 Seitenteile 28 mit parallel zu den Federschienen 34 verlaufenden Stützen 52, die nach außen weisen. Ein mittleres Halteteil 54 ist aus den Stützen 52 durch Einschnitte 50 getrennt und in eine Richtung senkrecht zu den Federschienen 34 gebogen, sodass die Halteteile 54 durch die Löcher 36 in den Federschienen 34 gesteckt werden können. Sie werden auf der anderen Seite nach außen umgebogen. Die Federschienen 34 werden dann fest zwischen den umgebogenen Enden 56 einerseits und den Stützflächen 46 der Stützen 52 gehalten. Die Halteteile 54 können aber auch durch Nieten, Stauchen, Kerben oder dgl. an ihren freien Enden plastisch verformt werden.

## Patentansprüche

1. Wischblatt (10) mit einem Wischgummi (12), in dessen seitliche Längsnuten (20) als federelastisches Tragelement zwei Federschienen (34) eingesetzt sind, wobei die Enden der Federschienen (34) durch eine Brücke (24) miteinander verbunden sind, indem Seitenteile (28) der Brücke (24) sich an der oberen Seite der Federschiene (34) über Stützflächen (46) abstützen, mit den Federschienen (34) fest verbunden sind und ein Mittelteil (26) der Brücke (24) eine die Längsnuten (20) nach oben begrenzende Deckleiste (22) überbrückt, wobei in den Federschienen (34) im Bereich ihrer Enden Löcher (36) vorgesehen sind, durch die Teile (38, 44, 54) der Seitenteile (28) hindurchgreifen und auf der dem Mittelteil (26) abgewandten Seite der Federschienen (34) plastisch so verformt sind, dass die Brücke (24) mit den Federschienen (34) fest verbunden ist, **dadurch gekennzeichnet, dass** die Seitenteile (28) parallel zu den Federschienen (34) verlaufende, nach außen weisende Stützen (52) besitzen, die an den Federschienen (34) anliegen und durch Einschnitte (50) von einem Halteteil (54) getrennt sind, das durch die Löcher (36) greift und auf der anderen Seite plastisch verformt ist.

2. Wischblatt (10) nach Anspruch 1, **dadurch gekennzeichnet, dass** mindestens ein Loch (36) je Brücke (24) ein Langloch mit einem rechteckigen oder abgerundeten Umfang ist.

3. Wischblatt (10) nach Anspruch 1 oder 2, **dadurch gekennzeichnet, dass** die Ränder der Löcher (36) mindestens an der dem Mittelteil (26) abgewandten Seite angefast sind.

4. Wischblatt (10) nach einem der vorhergehenden Ansprüche, **dadurch gekennzeichnet, dass** sich die Löcher (36) zum Mittelteil (26) konisch verjüngen.

5. Wischblatt (10) nach einem der vorhergehenden Ansprüche, **dadurch gekennzeichnet, dass** die Brücke (24) aus einem Blech durch Stanzen und Biegen hergestellt ist, wobei an den Seitenteilen (28) Lappen (44) angeformt sind, die durch die Löcher (36) ragen.

## Claims

1. Wiper blade (10) having a wiper blade rubber (12), in the lateral longitudinal grooves (20) of which wiper blade two spring rails (34) are inserted as a spring-elastic supporting element, wherein the ends of the spring rails (34) are connected to each other by a bridge (24) by side parts (28) of the bridge (24) being supported on the upper side of the spring rail (34) via support surfaces (46) and being connected fixedly to the spring rails (34), and a central part (26) of the bridge (24) spanning a top strip (22) which upwardly delimits the longitudinal grooves (20), wherein the spring rails (34), in the region of the ends thereof, are provided with holes (36) through which parts (38, 44, 54) of the side parts (28) reach and, on that side of the spring rails (34) which faces away from the central part (26), are plastically deformed in such a manner that the bridge (24) is connected fixedly to the spring rails (34), **characterized in that** the side parts (28) have outwardly facing supports (52) which run parallel to the spring rails (34), bear against the spring rails (34) and are separated by means of incisions (50) from a retaining part (54) which reaches through the holes (36) and is plastically deformed on the other side.

2. Wiper blade (10) according to Claim 1, **characterized in that** at least one hole (36) per bridge (24) is an elongated hole having a rectangular or rounded circumference.

3. Wiper blade (10) according to Claim 1 or 2, **characterized in that** the edges of the holes (36) are bevelled at least on the side facing away from the central part (26).

4. Wiper blade (10) according to one of the preceding claims, **characterized in that** the holes (36) taper conically to the central part (26).

5. Wiper blade (10) according to one of the preceding claims, **characterized in that** the bridge (24) is produced from sheet metal by punching and bending, with tabs (44) which protrude through the holes (36) being integrally formed on the side parts (28).

## Revendications

1. Balai d'essuie-glace (10) comprenant un caoutchouc d'essuie-glace (12), dans les rainures longitudinales latérales (20) duquel sont insérés deux rails à ressort (34) en tant qu'élément de support élastique à ressort, les extrémités des rails à ressort (34) étant connectées l'une à l'autre par un pont (24), en ce que des parties latérales (28) du pont (24) s'appuient sur le côté supérieur du rail à ressort (34) par le biais de faces d'appui (46), étant connectées fixement aux rails à ressort (34) et une partie centrale (26) du pont (24) surmontant une baguette de recouvrement (22) limitant vers le haut les rainures longitudinales (20), des trous (36) étant prévus dans les rails à ressort (34) dans la région de leurs extrémités, les parties (38, 44, 54) des parties latérales (28) venant en prise à travers ces trous et étant déformées plastiquement du côté des rails à ressort (34) opposé à la partie centrale (26) de telle sorte que le pont (24) soit connecté fixement aux rails à ressort (34), **caractérisé en ce que** les parties latérales (28) possèdent des bouts (52) tournés vers l'extérieur, s'étendant parallèlement aux rails à ressort (34), qui s'appliquent contre les rails à ressort (34) et qui sont séparés par des entailles (50) d'une partie de retenue (54) qui vient en prise à travers les trous (36) et qui est déformée plastiquement de l'autre côté.

2. Balai d'essuie-glace (10) selon la revendication 1, **caractérisé en ce qu'**au moins un trou (36) par pont (24) est un trou oblong avec une circonférence rectangulaire ou arrondie.

3. Balai d'essuie-glace (10) selon la revendication 1 ou 2, **caractérisé en ce que** les bords des trous (36) sont biseautés au moins du côté opposé à la partie centrale (26).

4. Balai d'essuie-glace (10) selon l'une quelconque des revendications précédentes, **caractérisé en ce que** les trous (36) se rétrécissent coniquement vers la partie centrale (26).

5. Balai d'essuie-glace (10) selon l'une quelconque des revendications précédentes, **caractérisé en ce que** le pont (24) est fabriqué à partir d'une tôle par estampage et cintrage, des langues (44) étant formées sur les parties latérales (28), lesquelles pénètrent à travers les trous (36).
